# EUROPEAN PATENT APPLICATION

(11) **EP 2 284 522 A1**
(43) Date of publication of application: **16.02.2011**
(21) Application number: 10170543.2
(22) Date of filing: 22.07.2010
(51) Int. Cl.: G01N 21/77, G02B 6/02

(54) **Photonic crystal fiber sensor**

(30) Priority: 31.07.2009 US 533941
(71) Applicant: Honeywell International Inc., Morristown, NJ 07962 (US)
(72) Inventor: Sanders, Glen A., Morristown NJ 07962-2245 (US); Johnson, Russell W., Morristown NJ 07962-2245 (US); Yates, Stephen, Morristown NJ 07962-2245 (US)
(74) Representative: Buckley, Guy Julian

(57) **Abstract**

Systems and methods for sensing a target analyte. An example sensor includes a tunable light source (22) that provides a substantially single optical mode of light, a detector (18), a processor (14), and a resonator (36). The resonator (36) resonates light provided by the light source (22) at a predefined frequency. The resonator (36) includes a photonic crystal fiber (30) having a solid region (56) that guides a substantially single optical mode of light and at least one hollow channel (46) adjacent to the solid region. The hollow channel (46) receives a fluid from an external source. The hollow channel (46) is coated with a film (48) having a material that is reactive with the target analyte in a manner that changes the optical properties of the film (48) . The detector (18) detects light from the resonator (36). A predetermined change in the detected signal as determined by the processor (14) indicates presence of the target analyte. The material in the film (48) is reversible.

## Description

### BACKGROUND OF THE INVENTION

The presence of a chemical or biological substance has traditionally been detected by utilizing one or more chemical reactions. These chemical reactions are usually irreversible, i.e. the reactions are not reset if the chemical or biological substance is removed from the device. Detection devices that utilize irreversible chemical reactions are typically time consuming and/or expensive to maintain because at least a portion of the detection device needs to be replaced or steps need to be undertaken to reset the device if a quantity of the chemical or biological substance has been detected.

Alternatively, a detection device may be reversible, i.e. the device will restore itself automatically if a detected chemical or biological substance is removed. Thus, a reversible device is usually reusable. One type of reversible detection device uses a physics-based, spectroscopic solution to determine the presence of a substance without a chemical reaction. Specifically, light is passed through a waveguide. The light extends into the environment and interacts with at least one contaminant in an adjacent environment. A detector is used to determine the specific contaminant and its concentration in the environment based on the characteristics of the received light.

An example reversible device uses ultra-thin nanowire fibers as waveguides. The nanowire fiber is thin enough to allow a portion of a lightwave to propagate in, and thereby interact with, the environment adjacent to the nanowire. However, the use of nanowire fiber is limited because nanowire is typically very fragile. It is also difficult to form nanowire coils having orientations other than a straight path due, in part, to the nanowire manufacturing process and inherent sensitivity to optical and mechanical characteristics of the packaging environment. These limitations influence the type of platform capable of housing a device and the structures that can be utilized. These limitations are compounded in a chemical or biological sensing device because the nanowire fiber needs to be exposed to the surrounding environment in order to interact with the substance to be detected. In such a platform, it is difficult to ensure only light and substance interactions, without interference from its packaging environment since it needs to be supported. Thus, the supporting environment severely compromises the measurement. Moreover, it is desirable to increase the length of the nanowire fiber used in a sensor because increasing pathlength increases measurement sensitivity. However, increasing the length of the nanowire leads to a device that is even more fragile and more challenging to package and support.

### SUMMARY OF THE INVENTION

The present invention includes systems and methods for sensing a target analyte. An example sensor includes a tunable light source that provides a substantially single optical mode of light, a detector, a processor, and a resonator. The resonator resonates light provided by the light source at a predefined frequency. The resonator includes a photonic crystal fiber having a solid region that guides a substantially single optical mode of light and at least one hollow channel adjacent to the solid region. The hollow channel receives a fluid from an external source. The hollow channel is coated with a film having a material that is reactive with the target analyte in a manner that changes the optical properties of the film. The tunable light source is in optical communication with the detector and the resonator. The resonator is in optical communication with the detector, and the detector is in data communication with the processor. The detector detects a resonance signal centered at the resonance frequency as the tunable light source is tuned through a region about the resonance frequency. A predetermined change in the resonance signal detected by the detector as determined by the processor indicates presence of the target analyte in the hollow channel. Two broad classes of materials are used for the film, one using which changes optical attenuation of the source lightwave propagation in the fiber when exposed to an analyte, the other that changes fluorescence properties (either enhancement or quenching) when exposed to the analyte.

The material in the film forms a complex with the target analyte. The bond causes a change in optical properties of the film. Complex formation is reversible, thereby allowing the sensor to be reversible.

### BRIEF DESCRIPTION OF THE DRAWINGS

Preferred and alternative embodiments of the present invention are described in detail below with reference to the following drawings:
FIGURE 1 is a schematic diagram of an analyte sensing device formed in accordance with an embodiment of the present invention;
FIGURE 2-1 is a cross-sectional view of a photonic crystal fiber with hollow channels used in the device shown in FIGURE 1;
FIGURE 2-2 is a perspective, x-ray view of a photonic crystal fiber with hollow channels including a plurality of holes formed in accordance with an embodiment of the present invention;
FIGURE 3-1 is a mode field distribution useful in understanding the photonic crystal fiber shown in FIGURES 1 and 2;
FIGURE 3-2 is a distribution showing the loss of light per pass through the resonator shown in FIGURE 1;
FIGURE 4-1 is a graphical representation of the resonator output when an analyte is not present in detectable quantities;
FIGURE 4-2 is a graphical representation of the resonator output when a significant amount of the analyte is present;
FIGURE 5 is a flow diagram of a method for sensing an analyte in accordance with the present invention;
FIGURE 6 is a schematic diagram of an analyte sensing device formed in accordance with an alternate embodiment of the present invention;
FIGURE 7 is a graph showing typical fluorescent profile generated by a source light of a given wavelength;
FIGURE 8-1 illustrates a signal produced at a first detector of the device shown in FIGURE 6;
FIGURE 8-2 illustrates a signal at a second detector included in the device shown in FIGURE 6;
FIGURE 8-3 illustrates a signal produced by the second detector of the device shown in FIGURE 6 when an analyte is present;
FIGURE 9-1 illustrates a signal at a first detector of the device shown in FIGURE 6 when a resonance-quenched film formulation is used;
FIGURE 9-2 illustrates a signal produced at the second detector of the device shown in FIGURE 6 when no analyte is present and a resonance-quenched film formulation is used;
FIGURE 9-3 illustrates a signal produced by the second detector of the device shown in FIGURE 6 when analyte is present and the resonance-quenched film formulation is used; and
FIGURES 10-12 illustrate alternate embodiments for using fluorescent type film within the resonator.

### DETAILED DESCRIPTION OF THE INVENTION

An apparatus and method are provided for sensing one or more chemical or biological substances. Applicant hereby incorporates U.S. Patent 7,336,859 and Published U.S. Patent Applications 2008/0212104 and 2008/0116361 in their entireties by reference.

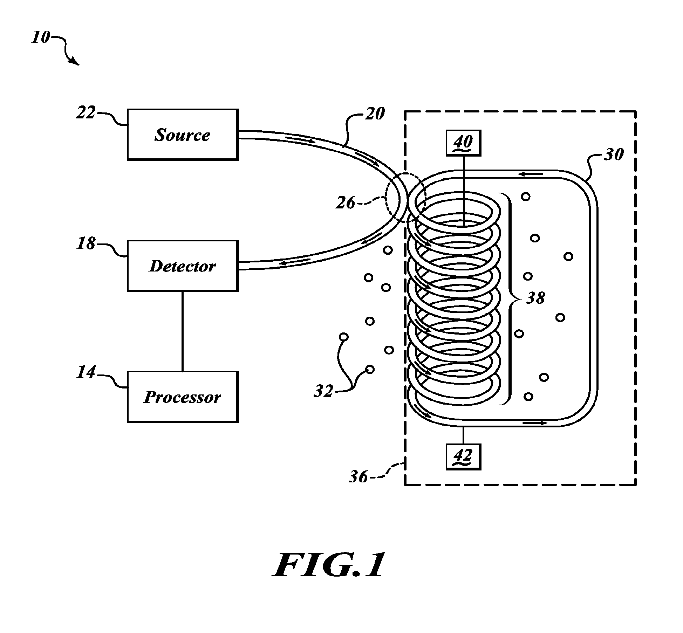

FIGURE 1 shows an analyte sensor 10. As used herein, "analyte" means a specific chemical or biological substance sought to be detected. The analyte sensor 10 includes a detector 18, a light source 22, a first fiber 20, and a resonator 36 with receptor film. The light source 22 and the detector 18 are in optical communication via the first fiber 20. The first fiber 20 is also in optical communication with the resonator 36. An optical connection between the first fiber 20 and the resonator 36 is defined by a coupling junction 26.

The light source 22 includes a tunable monochromatic light source such as, but not limited to, a tunable single frequency laser diode. In one embodiment, the light source 22 frequency is scanned over a period of time. Accordingly, the frequency of a resulting light wave may be a single value at any single point in time, but the frequency can be adjusted up or down according to the frequency desired for sensing. A tunable monochromatic light source is also referred to as a tunable single mode light source.

The resonator 36 includes a second fiber 30 that forms a coil 38. The second fiber 30 has two ends that are optically connected to form a closed light path by conventional methods such as utilizing a mechanical splice, fusion bonding, or free space optics. Alternatively, any optical element that reintroduces a substantial portion of light emerging from one end of the second fiber 30 to the other end of the second fiber 30 may be used to optically connect the two ends. Light introduced into the second fiber 30 propagates there through multiple times.

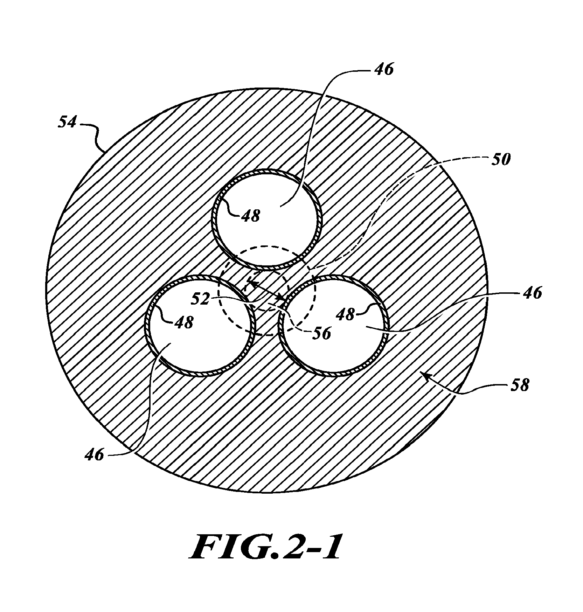

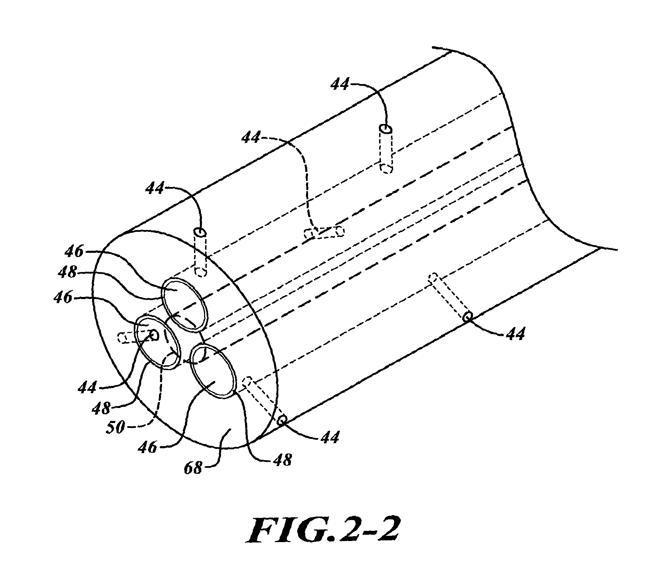

The second fiber 30 includes a single mode photonic crystal fiber (PCF) with one or more hollow channels. FIGURE 2 illustrates a cross-sectional view of one embodiment of a PCF 54, U.S. Pat. No. 5,802,236 to DiGiovanni et al.; U.S. Pat. No. 6,243,522 to Allen et al.; 6,334,017 to West et al.; and U.S. Pat. No. 6,334,019 to Birks et al. are hereby incorporated herein by reference in their entireties.

The PCF 54 includes a cladding region 58, three round-cross-section hollow channels 46, and solid region 56 where an optical field 50 can be guided. The solid region 56 forms the core of the fiber, in that its average index of refraction is higher than that of the surrounding cladding region 58, which is a region that includes the hollow channels 46 and the solid region outside of the core solid region 56. Each hollow channel 46 is a free space hole. The hollow channels 46 have a refractive index that is lower than the refractive index of the solid region 56. The solid region 56 is called the core to one skilled in the art, since the most intense part of the light is confined to travel within it, similar to the case of index-guided conventional single mode fibers. A receptor film 48 is attached to the walls of the hollow channels 46, thus adding a third material to the cladding region 58. The solid portion of the cladding 58, other than the film 48, is typically composed of a glass material that is usually the same material as in the solid region 56. The hollow channels 46 do not intersect each other. The hollow channels 46 are positioned so that a solid region 56 between the hollow channels 46 forms an index of refraction cross-sectional profile that allows light in the optical field 50 to be guided with a fraction of light in the solid region 56 and a fraction of light guided in the hollow channels 46. Another material candidate for the solid material, in some systems or applications, is a plastic, or polymer.

The receptor films 48 include receptor molecules that bond to a target analyte. In one embodiment, the complex formed between the receptor molecules and the target analyte can be reversed. For example, triphenyleneketals are included in the receptor films 48 for bonding to any trinitrotoluene (TNT) that may be present. The receptor molecules form selectively host-guest complexes with the target analyte in a kind of key lock system which causes a change in optical properties of coating (film 48) thus producing a reduction of light intensity in the fiber 36 and within the resonator 36. This, in turn, changes the profile of the signal intensity observed by the detector 18 as the frequency of the source 22 is scanned. In this way the selective and sensitive identification of analyte is possible. The receptor film 48 is covalently attached to the walls of the channels 46 by any of a variety of methods known to those skilled in the art. The method that is chosen depends on the chemical composition of the channel walls, and on how much receptor needs to be attached. For example, if the channel walls include silicon dioxide, a titanate or siloxane coupling agent may be used to create an anchor for the receptor. In one embodiment, the receptor is covalently attached directly to these anchors or is attached to a polymer which is attached to the anchors. If a polymer is used, it will be understood that this polymer needs to have certain characteristics. The polymer must be stable within the temperature range of interest and unreactive with any contaminant expected in the system. The polymer must further have a refractive index which will prevent it from perturbing the optical properties inside the fiber. Finally, in the form in which it is applied, the viscosity must be sufficiently low so that it can flow inside the channel, smoothly covering the available surface.

The receptor molecule (film) has two characteristics: (1) it has an absorption band at a wavelength similar to that of the wavelength of light provided by the laser, and (2) it forms a reversible complex with the analyte which alters the intensity or wavelength of this adsorption band. It is also highly desirable that the receptor be specific enough in its interaction with the analyte that spurious contaminants which happen to be present will not form complexes. Reversible complex formation is an equilibrium process. The extent to which a complex forms will depend on the temperature of the device and the concentration of the contaminant. Higher concentrations of contaminant in the passing air will lead to more complex formation, and lower concentrations will lead to complex formation being reversed.

In one embodiment, an example receptor film is triphenyleneketal that includes an electron-rich aromatic nucleus surrounded by bulky ketal groups. The triphenyleneketal is set up to form a complex with an electron-poor aromatic species like TNT, but the bulky groups limit the shape of the species which can get in to form a complex. Only something about the shape of TNT can get in. The electron-rich aromatic rings absorb light in the visible region. When a host-guest complex is formed, electron transfer from the host to the guest occurs, changing the adsorption spectrum of the host. Within this affected spectrum is the signal light frequency for which the fiber optics resonator is circulating within the fiber 30 of FIGURE 1.

Another possibility is that it is an emission (fluorescence) which is observed. This will occur if light is absorbed by the receptor at one wavelength, but the emission is from an excited state complex (exciplex) instead of from the receptor. This will occur at a different wavelength. Thus the presence of the analyte will be indicated by observation of emitted light at this different wavelength. Yet another possibility is that the receptor fluoresces in the absence of an analyte, and that formation of a complex between the receptor and the analyte reduces the intensity of this fluorescence. This is known by those skilled in the art as fluorescence quenching. Note that specificity of the receptor to the analyte is important, and can be engineered into the receptor structure by ensuring that there is a driving force for complexation, and that steric constraints limit access to the complexation site to molecules of roughly the size and shape of the analyte. Examples of receptors which indicate the presence of explosives by fluorescence quenching are known to those skilled in the art. Such examples include polymers containing tetraphenylsilole vinylene or silafluorenevinylene as described by Trogler et al (Chem. Mater., 19, 6459-6470, 2007), polymers containing ethynyl iptycene structures as described by Swager et al (J. Phys. Chem. C Lett., 112, 881-884, 2008) or carbazole-cornered arylene ethynylene tetracycles as described by Moore et al (J. Amer. Chem. Soc., 129 6978-6979, 2007).

In one embodiment, a diameter 52 of the solid region 56 (core region) is smaller than a wavelength of light emitted from the light source 22. As will be discussed in more detail herein, light propagates in the optical field 50, and at least a portion of the light intensity passes through the hollow channels 46. The amount of light intensity to be extended into the hollow channels 46 may be varied based on a variety of factors (e.g. refractive index of cladding region, thickness of cladding region, diameter of the core region 56, or number and size of hollow channels). It is understood that the PCF 54 could be formed with various geometries and having various compositions and could include various quantities and configurations of hollow regions in the cladding.

In one embodiment, the resonator 36 is formed with a PCF having an extremely low bend loss so that the coil section 38 of the resonator 36 has a relatively large number of turns about a substantially small area. Bend loss refers to a quantity of light that exits a fiber at a turn. In one embodiment, the coil section 38 has approximately 20-40 turns about a one centimeter diameter. More or less turns can be utilized depending on a variety of factors of the analyte sensor 10 such as package size, cost, and signal-to-noise ratio. In comparison to prior art devices made from nanowires, the resonator 36 allows for both an increased effective pathlength, ruggedness over environment, and a smaller package size. Increasing the effective pathlength is desirable because it allows for increased device sensitivity (i.e. greater signal-to-noise ratio).

Light transfers between the first fiber 20 and the second fiber 30 at the coupling junction 26. It is understood by those skilled in the art that light may be transferred between the first fiber 20 and the second fiber 30 by a variety of techniques and configurations to provide the intended function of coupling light into the resonator 36 and/or coupling light to the first fiber 20 from the resonator 36 (i.e. the second fiber 30).

Light transfers between the first fiber 20 and the second fiber 30 occurs, in part, because the core regions of the two fibers are brought into close proximity, often with the cladding region 58 thinned down or polished off. In one embodiment, the cores of the first fiber 20 and second fiber 30 are positioned adjacent to each other via a fusing process in which the glass is heated and thinned in the coupling region, bringing the fiber cores close to each other to facilitate light transfers from fiber to fiber. Alternatively, the cladding of the first fiber 20 and the second fiber 30 may be shaved, thinned, or polished by conventional techniques thereby allowing the inner portions of the fibers 20 and 30 to be attached to each other. As an example, attaching may be accomplished with optical contact or epoxy.

The percentage of the light transferring between the first fiber 20 and the second fiber 30 at the coupling junction 26 depends on multiple factors such as, but not limited to, the speed of light traveling in the fibers 20 and 30, the distance between the optical fields in first fiber 20 and the second fiber 30, the length of the coupling junction 26, the size and configuration of the hollow channels 46, and the composition of the cladding region 58.

FIGURE 2-2 shows an embodiment of the second fiber 30 where the second fiber 30 includes a plurality of holes 44 extending from an exterior of the PCF 54 through at least a portion of a cladding region 58 and into the hollow cores 46. In one embodiment the plurality of holes 44 terminate at the hollow channels 46. The plurality of holes 44 can be formed using conventional laser drilling/boring techniques. The holes 44 expose the hollow channels 46 to an adjacent environment. In operation, the fluid that might contain a target analyte diffuses or otherwise permeates into the hollow channels 46 via the plurality of holes 44 from the adjacent environment. As used herein "fluid" means matter in a substantially gaseous phase, matter in a substantially liquid phase, or matter in a state of equilibrium between the gaseous and liquid phases.

In another embodiment, the hollow channels 46 of the second fiber 30 are configured to include an input channel 40 and an output channel 42 (FIGURE 1). The input channel 40 and the output channel 42 define one or more pathways passing through the cladding region 58 in/out of the hollow channel 46. A fluid that may contain an analyte 32 is introduced into the hollow channel 46 at the input channel 40. A pressure differential is applied to the input channel 40 and the output channel 42 using conventional methods. The pressure differential "sucks" the fluid into and/or through the hollow channels 46. In one embodiment, the input channel 40 and the output channel 42 can be configured to introduce the fluid to just one or some, but not all, of the hollow channels 46.

In operation, light from the source 22 propagates through the resonator 36 multiple times in one direction. The nominal wavelength (frequency) of light from the source 22 is adjusted to a region of interest where the target analyte creates a particular change in optical properties or an expected absorption response when coming in contact with the receptor film 48. The frequency of the light from the source 22 is adjusted or scanned so that it excites one or more resonator resonances; namely the frequency is scanned (about its nominal frequency) through a region containing one or more resonance frequencies or the resonator. A resonance signal is produced from the light traveling in the region of the resonance frequency. A portion of the light propagating through the resonator 36 is passed from the second fiber 30 to the first fiber 20 at the coupling junction 26. A resonance signal indicative of light circulating within the resonator 36 is detected by the detector 18. The detector 18 is typically a semiconductor photodiode, such as those made from silicon or InGaAsP, depending on wavelength of light used.

Analyte sensing is accomplished by introducing the fluid that may contain the analyte 32 into the hollow channels 46. If the analyte 32 is not present in the fluid, a first resonance signal is detected by the detector 18. If the analyte 32 is present in the fluid, the analyte 32 interacts (e.g. absorbs) with the receptor molecules on the receptor film 48 within the fiber 30. The interaction between the light and the analyte 32 alters the first resonance signal at a given wavelength. In other words, the specific resonance signal produced by the resonator 36 depends on the presence of the analyte 32 in the hollow channels 46.

A processor 14 coupled to the detector 18 determines the presence and/or quantity of the analyte 32 in the fluid based on the signal detected by the detector 18. In one embodiment, the processor 14 is configured to determine the concentration of the analyte 32 in the fluid based on the signal detected by the detector 18.

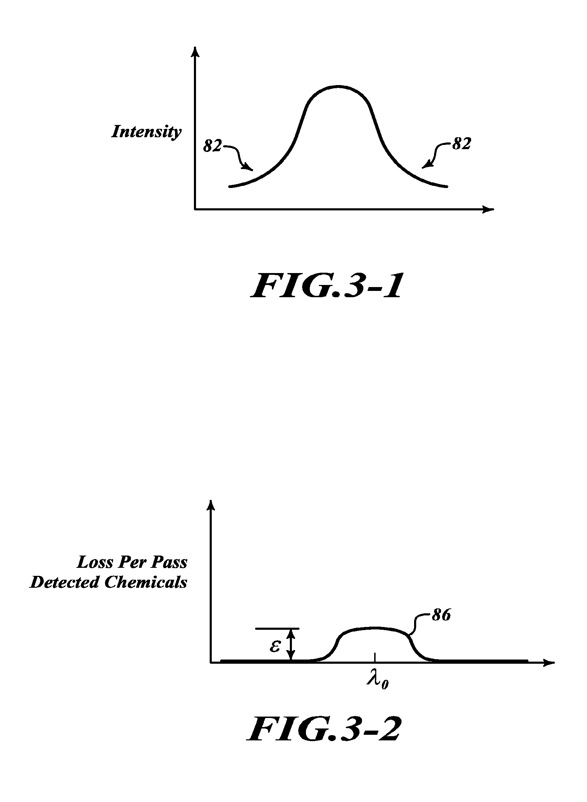

FIGURE 3-1 is an example mode field distribution useful in understanding the PCF 54 shown in FIGURES 1 and 2. Specifically, the mode field distribution of the light emitted from the source 22 has an optical energy spatial distribution that is approximately Gaussian shaped, or similar to a Gaussian shape, with evanescent tails 82. A significant quantity of the light intensity extends into the hollow channels 46 in the case where the size of the solid region 56 (FIGURE 2-1) in between the hollow channels 46 in which the optical field 50 is resident is close to, or even smaller than the wavelength of the light emitted from the source 22.

FIGURE 3-2 shows a graph representative of a loss per pass 86 (denoted as ε) associated with the presence of a quantity of an analyte in the second fiber 30. The loss per pass 86 represents the light energy absorbed by the analyte for each pass through the resonator 36. Loss per pass 86 is proportional to the concentration of the analyte.

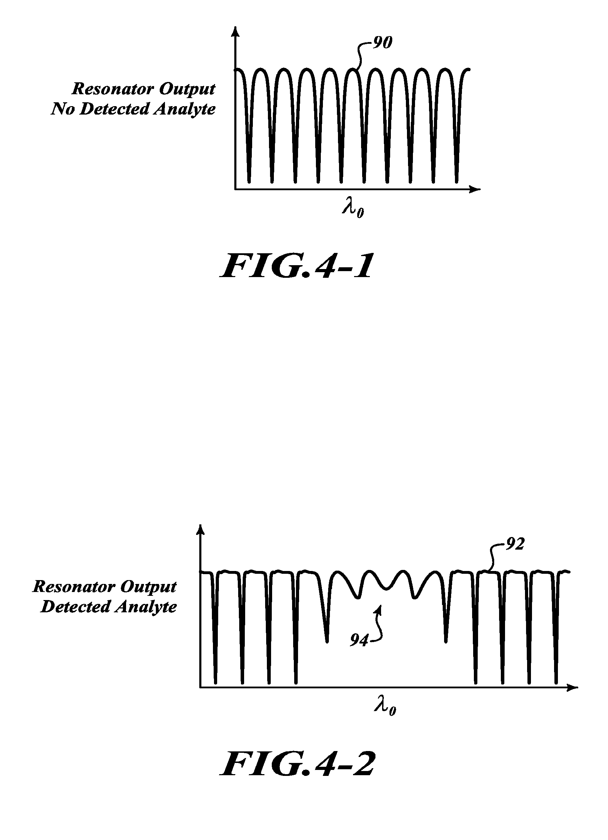

FIGURE 4-1 shows a first resonance lineshape 90 determined by the processor 14 based on the signal detected by the detector 18. The first resonance lineshape 90 includes a narrow profile. The first resonance lineshape 90 indicates that essentially no light energy was absorbed in the resonator 36, i.e. no significant loss. Accordingly, the first resonance lineshape 90 indicates that a detectable or measurable quantity of the analyte 32 is not present in the hollow channels 46.

FIGURE 4-2 shows a second resonance scan with a first narrow lineshape dip 92 at one frequency in the scan determined by the processor 14 based on the resonance signal detected by the detector 18. A second lineshape 94 in the scan includes a broadened lineshape with a shallower dip. The second lineshape 94 indicates that some light energy has been absorbed while passing through the resonator 36. Thus, the change in the second resonance lineshape from 92 to 94 indicates the presence of a quantity of the analyte 32 in the hollow channels 46. The processor 14 may determine the specific quantity of the chemical present in the fluid based on a signal corresponding to the lineshapes 92 and 94.

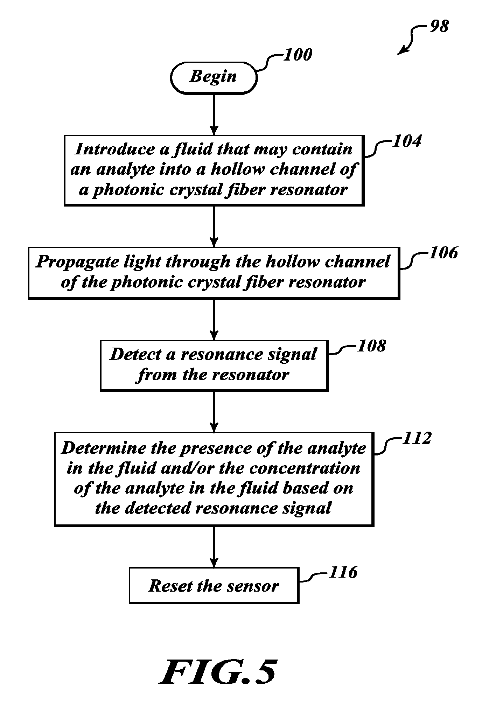

FIGURE 5 is a flow diagram of a process 98 for sensing one or more chemical/biological agents in an environment. The process begins at block 100. At block 104, a fluid that may include the analyte 32 is passed through the second fiber 30. As discussed in more detail above, the fluid is passed through the hollow channels 46 by diffusing in from an adjacent environment through the plurality of holes 44 extending from the exterior of the PCF 54 into the hollow channels 46. Alternatively, the fluid is introduced or passed through the hollow channels 46 via the input 40 and output 42 by a pressure differential applied to the input 40 and the output 42. At block 106, light from the light source 22 is propagated through the resonator 36. The light source 22 is scanned through a wavelength or wavelength region of interest where the analyte 32 has a molecular absorption resonance line or is known to exhibit certain properties. In one embodiment, the frequency of light is scanned through resonator resonances about one or more nominal wavelengths of interest. Different nominal wavelengths may be used to observe different analytes. At block 108 a resonance signal is detected by the detector 18 based on the light propagating in the resonator 36. At block 112, the processor 14 determines the quantity (if any) of the analyte 32 present based on the detected resonance signal. In one embodiment, the processor 14 identifies the specific chemical or biological substance present in the fluid based on the resonance signal. In another embodiment, the processor 14 determines the concentration of the analyte 32 in the fluid based in part on the resonance signal. At block 116, the process 98 may be reset without any adjustment to the fiber 30 even if a quantity of the analyte 32 was previously determined to be present in the fluid. In other words, the process 98 is reversible if the fluid does not contain the target analyte. This causes the complexes between the target analyte 32 and the film 48 to break, thereby allowing the target analyte 32 to pass out of the sensor 10.

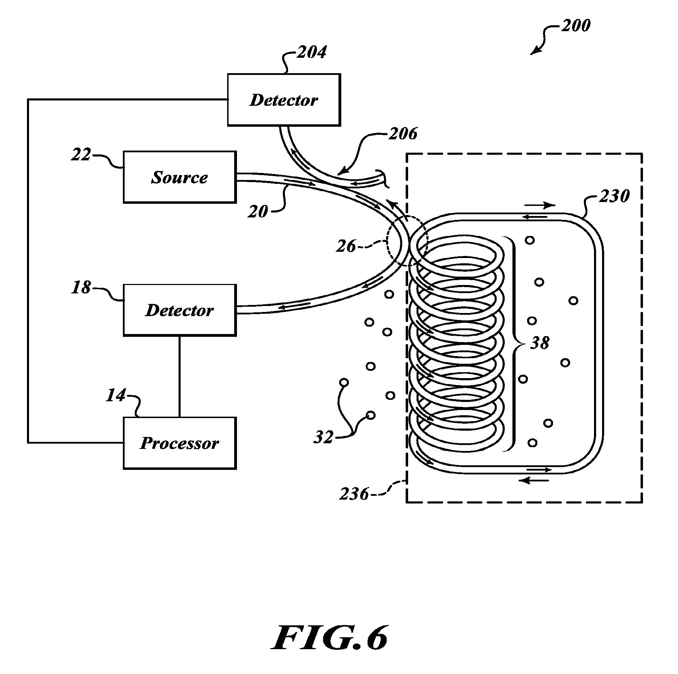

FIGURE 6 shows an analyte sensor 200 that senses using a second detector 204. In this embodiment, the film inside the resonator 236 changes its fluorescence when exposed to the target analyte. Light from the light source 22 is directed toward the resonator 236 as in FIGURE 1, and its frequency is scanned so that the source frequency (wavelength) resonates the forward or counterclockwise (ccw) direction as in FIGURE 1. An optical coupler 206 directs fluorescent light traveling in the opposite direction as the source light toward detector 204. The light incident on the detector 204 is emitted from the thin film inside the sensing coil fiber of the resonator 336 via fluorescence whenever the source light resonates within the resonator 336 in the ccw direction. The fluorescence signal travels in the backward direction or clockwise direction (cw) in the coil fiber 230, exits the resonator 236, and is directed to the detector 204 via the optical coupler 206.

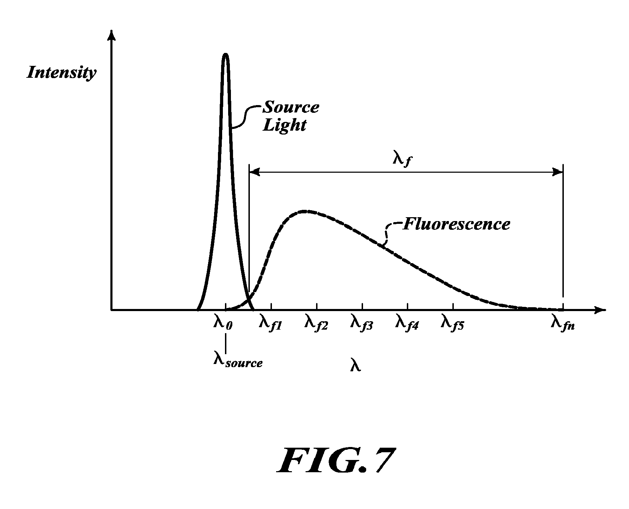

The magnitude of the fluorescence signal depends on the presence of the analyte. FIGURE 7 shows a typical fluorescence profile generated by source light of a given wavelength. The sources light is typically monochromatic having a narrow frequency band of light so as to resonate and build up a high field strength within the resonator at resonance. This resonating light in the ccw direction provides the energy for a film to fluoresce light at wavelengths longer than the wavelength of the source light, typically with a broader spectrum of wavelengths (λ_{f}) ranging encompassing wavelengths λ_{f1}, λ_{f2}, ....λ_{fn} and in all directions. Because only the backward propagating light is captured in FIGURE 6, the fiber for the resonator 236 is typically designed or selected to capture and guide as much light as possible within its core in the cw direction; namely it has a high numerical aperture. The fiber geometry may be similar or identical to that shown in FIGURES 2-1 and 2-2.

In one embodiment the thin film employed within the fiber 230 is configured to significantly increase the fluorescence ("fluorescence enhanced") inside the fiber when exposed to the target analyte and be nominally low when not exposed. Alternately, the thin film fluoresces significantly in the absence of the target analyte, substantially ceases to fluorescence or significantly reduces fluorescence when exposed to the target analyte ("fluorescence quenched"). In both cases, the signal at the detector 204 changes when the target analyte is changed from being present to absent and is greatly enhanced by the interaction length in the fiber, the proximity of the ccw light mode to the film, and the strength of the resonance in the ccw direction.

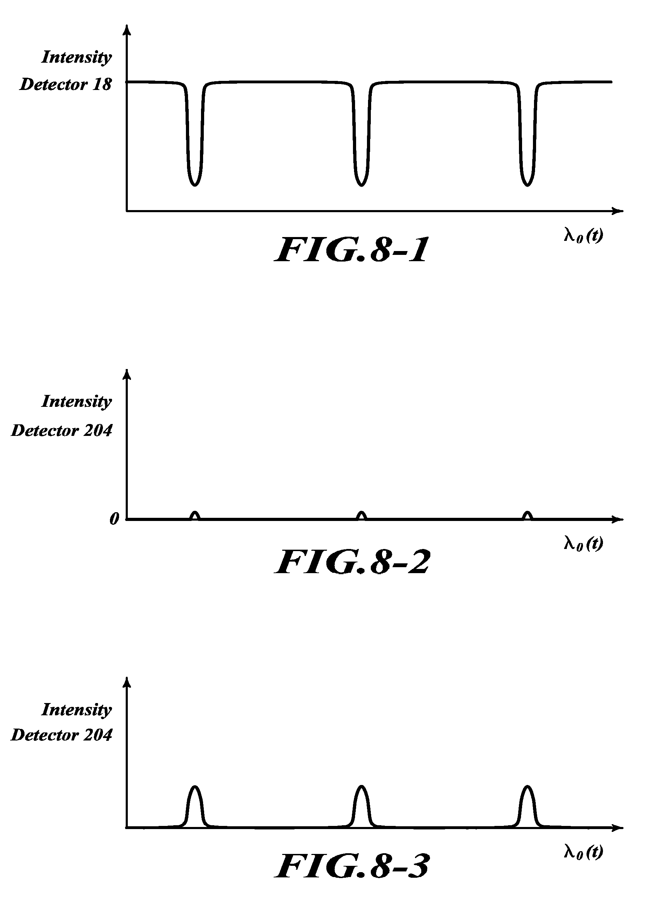

FIGURE 8-1 shows the signal at the detector 18 as the source frequency is swept when no analyte is present. This is very similar to that shown in FIGURE 4-1.

FIGURE 8-2 shows the signal at the detector 204 in the fluorescence enhanced case when the source light frequency (wavelength) is scanned through the resonator resonance and no analyte is present. The film material emits little or no detectable fluorescence of light and very little light is detected at the detector 204, even when the source light is swept through resonance of the resonator 236.

FIGURE 8-3 shows output of the detector 204 in the fluorescence enhanced case when the source light frequency (wavelength) is scanned through resonance and analyte is present. The film material now emits detectable fluorescence of light and that light is detected at the detector 204 when the source light is swept though resonance. In this case the strong buildup of light at the source frequency within the resonator at resonance pumps the molecules of the film (which have been affected by the analyte) to an excited state, enabling them to fluoresce when the source is tuned to resonance.

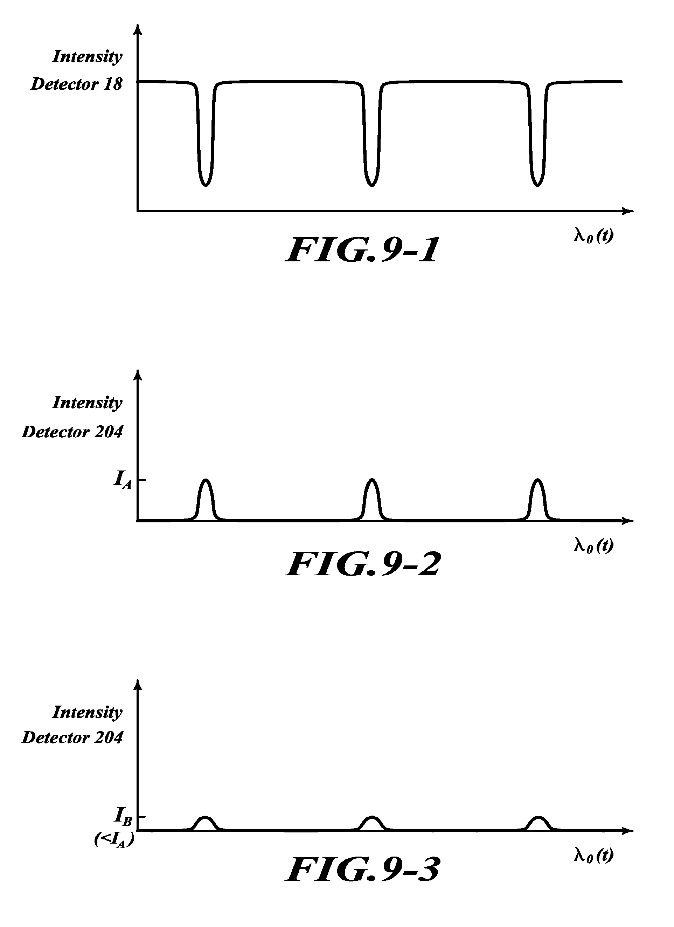

FIGURE 9-1 shows the signal at the detector 18 as the source frequency is swept when no analyte is present. This is very similar to FIGURES 4-1 and 8-1. In this case the interior of the fiber is coated with fluorescence-quenching film.

FIGURE 9-2 shows the signal at the detector 204 in the fluorescence quenched case when the source light frequency (wavelength) is scanned through the resonator resonance and no analyte is present. The film material emits fluorescent light which is detected at the detector 204 when the source light is swept though resonance of the resonator 236.

FIGURE 9-3 shows output of the detector 204 in the fluorescence quenched case when the source light frequency (wavelength) is scanned through the resonator resonance and the analyte is present. The film material in now inhibited from emitting detectable fluorescence of light and much less light is detected at the detector 204 when the source light is swept through resonance of the resonator 236. In this case, even though there is a buildup of light at the source frequency within the resonator 236 at resonance, the absorption and or emission properties of the molecules of the film (which have been affected by the target analyte) are altered to a reduced fluorescent state when the source is tuned to resonance.

It is noted that, in all the above cases associated with FIGURE 6 a phosphorescent film may also be used, however, the reaction time of the film is slower, and the response at the detector 204 may be delayed from the time when the source is tuned through resonance. In that case the tuning speed of the source 22 may be adjusted to ensure that the delayed response of the detector 204 can be methodically correlated with the scan of the source light through resonance at an earlier time.

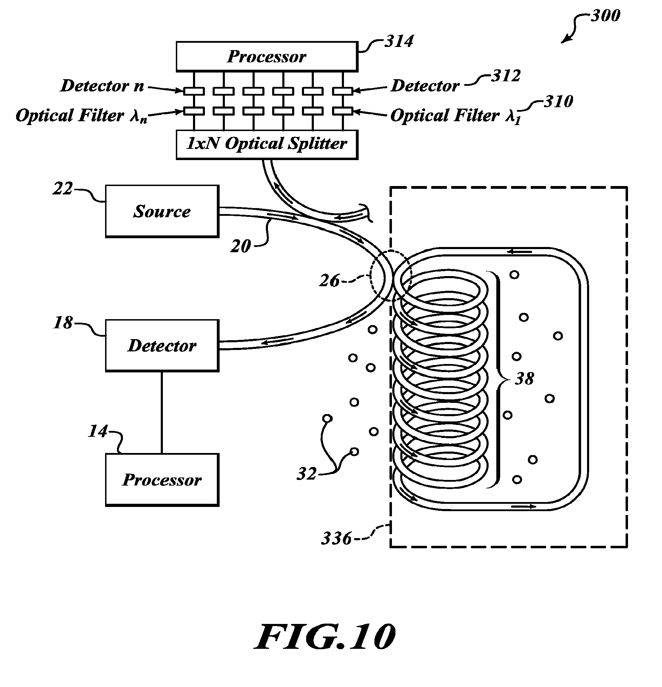

FIGURE 10 is an alternative embodiment showing an analyte sensor 300 that is responsive to fluorescence (or phosphorescent) changes, both enhanced and quenching cases, in which there is capability employed to analyze the signal changes as a function of wavelength for light propagating in the cw direction. By analyzing the fluorescence changes for multiple wavelengths λ_{f1}, λ_{f2}....λ_{fn} extra capability is realized. The first additional capability is greater reliability (reduced false indications of the analyte) since, if there are interference analytes that can trigger similar fluorescence changes as the target analyte, they can be distinguished via wavelength analysis. Secondly, the sensor 300 can measure more than one target analyte (multiple film materials, or one film material sensitive to more than one analyte) and distinguish which analyte has triggered the changes via an analysis of the fluorescence spectra (vs wavelength). The sensor 300 includes a wavelength-channelized detection system. Light exiting a resonator 336 in the cw direction is directed to a series of N filter-detector pairs via a 1 by N splitters 306. Each filter 310 only passes light in a selected wavelength region (e.g., λ_{f1} or λ_{f2}) so that only light at that wavelength is passed to a corresponding detector 312. Fluorescence changes as a function of wavelength may be measured and processed at a processor 314.

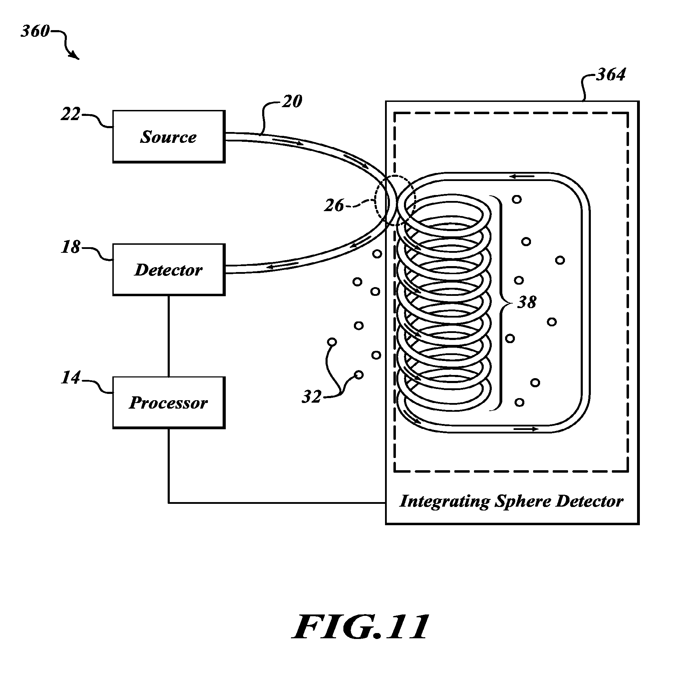

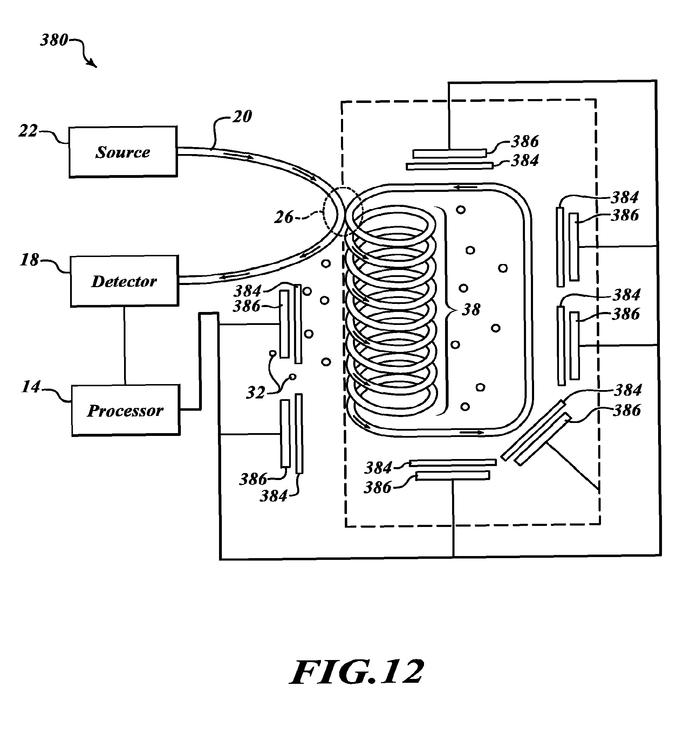

FIGURES 11 and 12 depict alternative embodiments of analyte sensors 360, 380 using film that fluoresces. Both of these embodiments depict the detection of fluorescence changes from the sides of the fiber coil 30. In FIGURE 11, the sensor 360 includes an integrating sphere 364 substantially surrounds the fiber coil 30. The integrating sphere 364 efficiently gathers a very large fraction of the fluorescent light from the film. The sensor 360 has a higher signal-to-noise ratio than the sensor 200.

As shown in FIGURE 12, the sensor 380 includes one or more optical filters 384 and one ore more detectors 386. The optical filters 384 are located along side the fiber coil 30. Each optical filter 384 collects light fluoresced from the fiber coil 30 and filters it according to a predefined optical bandwidth or wavelength. Each detector 386 receives light filtered by a respective filter 384. The sensor 380 also has a higher signal-to-noise ratio than the sensor 200. Optical Filters 384 may are typically bandpass devices each centered at a different wavelength, 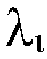 , within the spectrum of interest to pass light within an interval of wavelengths centered around 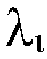 . Typically these filters (glass filters, dye filters, etc.) may use a transparent material that also contain materials with wavelength-dependent absorption spectra. Alternatively narrowband filters may be based on interference effects (etalons, dielectrically coated etalons, Fabry-Perot interferometers, gratings, etc,) that constructively interfere light transmitted that is centered about a certain wavelength, 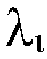 , but not at other wavelengths. The detectors are typically those that cover a very wide band of light in the spectrum of interest, wider than the bandwidth of each filter. For instance, for visible light the detector may be a silicon photodiode, whereas for near-infrared, it may be an InGaAsP photodiode.

While the preferred embodiment of the invention has been illustrated and described, as noted above, many changes can be made without departing from the spirit and scope of the invention. Accordingly, the scope of the invention is not limited by the disclosure of the preferred embodiment. Instead, the invention should be determined entirely by reference to the claims that follow.

The embodiments of the invention in which an exclusive property or privilege is claimed are defined as follows:

## Claims

1. A sensor (10) for sensing a target analyte, the sensor comprising:
a light source (22) configured to provide a light signal;
a detector (18);
a processor (14) in signal communication with the detector; and
a resonator (36, 236) configured to resonate the provided light signal, the resonator comprising a photonic crystal fiber (30) comprising:
a solid region (56); and
at least one hollow channel (46) adjacent to the solid region, the at least one hollow channel configured to receive a fluid (para. [0040]) from an external source, one or more of the at least one hollow channel is coated with a film (48) having a material that is reactive with the target analyte (para. [0030]) in a manner that changes the optical properties of the film,
wherein the resonator is in optical communication with the detector, and
wherein the detector detects light outputted from the resonator and outputs an optical signal value (para. [0041]-[0043]), and
wherein the processor determines if the target analyte is present based on the outputted optical signal value (para. [0041]-[0043]).

2. The sensor of Claim 1, wherein the tunable light source is configured to provide a substantially single optical mode of light (para. [0026]).

3. The sensor of Claim 1, wherein the detector detects an optical signal centered at one or more predefined resonance frequencies (para. [0061]) as the tunable light source is tuned through at least one region about the one or more predefined resonance frequencies (para. [0057]-[0058]), a predetermined change in the detected signal as determined by the processor indicates presence of the target analyte in the at least one hollow channel (para. [0047]).

4. The sensor of Claim 1, wherein the photonic crystal fiber coil further comprises an input component (40) and an output component (42) configured to pass fluid through a substantial portion of the at least one hollow channel.

5. The sensor of Claim 4, wherein the input and the output components are configured to apply a pressure differential to the at least one hollow channel (para. [0040]).

6. The sensor of Claim 1, wherein the photonic crystal fiber coil further comprises a plurality of holes (44) extending from an exterior of the photonic crystal fiber coil into the at least one hollow channel, the plurality of holes pass the fluid through a substantial portion of the at least one hollow channel.

7. The sensor of Claim 1, wherein the material in the film forms a complex with the target analyte, the complex causes a change in optical properties (para. [0030]-[0033]).

8. The sensor of Claim 7, wherein complex formation is reversible, thereby allowing the sensor to be reversible (para. [0030]-[0033]).

9. The sensor of Claim 7, wherein said resonator includes a first optical coupler (26) configured to couple light into the resonator from the light source and couple light associated with a fluorescent event towards the light source, the sensor further comprising:
a second optical coupler (306) configured to couple light associated with the fluorescent event out of a light path between the first optical coupler and the light source,
wherein the detector receives the light coupled out of the light path by the second optical coupler.

10. A means for sensing a target analyte comprising:
a means for providing light (22);
a means for resonating the provided light (36, 236);
a means for forming a complex with the target analyte inside the means for resonating(30, 46, 48, 56), the complex causes a change in optical properties;
a means for detecting an optical signal outputted from the means for resonating (18); and
a means for determining if the target analyte is present based on the detected optical signal (14).
